(19) **Europäisches Patentamt / European Patent Office / Office européen des brevets**

(11) **EP 3 983 651 B1**

(12) **FASCICULE DE BREVET EUROPEEN**

(45) Date de publication et mention de la délivrance du brevet:
**15.04.2026 Bulletin 2026/16**

(21) Numéro de dépôt: **20743744.3**

(22) Date de dépôt: **12.06.2020**

(51) Classification Internationale des Brevets (IPC):
**F01D 5/22** *(2006.01)*     **F01D 5/14** *(2006.01)*

(52) Classification Coopérative des Brevets (CPC):
**F01D 5/225; F01D 5/141;** F05D 2240/304;
F05D 2250/31; F05D 2260/941; Y02T 50/60

(86) Numéro de dépôt international:
**PCT/FR2020/051007**

(87) Numéro de publication internationale:
**WO 2020/249914 (17.12.2020 Gazette 2020/51)**

(54) **AUBE DE TURBOMACHINE AVEC TALON OPTIMISÉ ET PROCÉDÉ D'OPTIMISATION D'UN PROFIL D'AUBE**

TURBOMASCHINENSCHAUFEL MIT EINEM OPTIMIERTEN BAND AND VERFAHREN ZUR OPTIMIERUNG EINES SCHAUFELPROFILS

BLADE OF A TURBOMACHINE WITH AN OPTIMIZED SHROUD AND OPTIMIZATION PROCESS OF A BLADE PROFILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2019 FR 1906411**

(43) Date de publication de la demande:
**20.04.2022 Bulletin 2022/16**

(73) Titulaire: **SAFRAN AIRCRAFT ENGINES**
**75015 Paris (FR)**

(72) Inventeurs:
• **GIVERT, Maxime, Paul, Numa**
**77550 Moissy-Cramayel (FR)**
• **DAMOUR, Christophe**
**77550 Moissy-Cramayel (FR)**
• **GIMEL, Alexandre**
**77550 Moissy-Cramayel (FR)**
• **MAXIME, Elsa**
**77550 Moissy-Cramayel (FR)**
• **TRAHOT, Denis, Gabriel**
**77550 Moissy-Cramayel (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
EP-A1- 1 612 372     JP-A- 2000 018 003
JP-A- H0 960 501     JP-A- H07 253 001
US-A- 4 165 949

EP 3 983 651 B1

## Description

### Domaine technique de l'invention

La présente invention concerne le domaine des aubes de turbomachine pour aéronef. Elle vise en particulier la conception et/ou la fabrication de ces aubes de turbomachine.

### Arrière-plan technique

L'art antérieur comprend les documents JP-A-H09 60501, JP-A-2000 018003, JP-A-H07 253001, US-A- 4 165 949, et EP-A1-1 612 372.

De nombreuses pièces mécaniques de turbomachine font l'objet de modifications et/ou sont reconçues de manière à améliorer les performances des turbomachines. Les aubes de turbine basse pression sont notamment concernées avec désormais des profils aérodynamiques optimisés. De manière générale, une aube de turbine basse pression pour une roue mobile comprend une pale aérodynamique s'étendant suivant un axe radial perpendiculaire à l'axe longitudinal et délimitée radialement par un pied interne et un talon externe. La pale comprend un bord d'attaque et un bord de fuite qui sont reliées par des surfaces intrados et extrados. Un moyen d'optimiser le profil aérodynamique de la pale est obtenu par la réduction de l'épaisseur du bord de fuite de l'aube, de l'ordre de 0.30 mm (à partir d'1 mm du bord de fuite suivant la circulation des gaz dans la turbomachine), de sorte à éviter les pertes aérodynamiques.

Cependant, cette nouvelle géométrie introduit de nouvelles contraintes particulières en termes de fabricabilité et de conception pour respecter les objectifs de durée de vie par rapport à des aubes dites « classiques ». Les bords de fuites sont également sujets à des contraintes mécaniques élevées sur toute leur hauteur radiale et notamment au niveau des jonctions avec les pieds et/ou les talons des aubes lors des rotations de celles-ci.

La présente invention a notamment pour objectif de fournir une aube de turbomachine dont le profil est optimisé de manière à réduire les contraintes appliquées sur son bord de fuite au cours du fonctionnement de la turbomachine.

### Résumé de l'invention

Nous parvenons à cet objectif conformément à l'invention grâce à une aube de turbomachine d'aéronef comprenant une pale s'étendant suivant une direction radiale, la pale présentant une surface intrados et une surface extrados qui sont reliées en amont, suivant un sens de circulation d'un gaz dans la turbomachine, par un bord d'attaque et en aval par un bord de fuite, la pale ayant à une extrémité radialement externe un talon et comportant une section transversale de tête dans un plan perpendiculaire à une direction radiale de la pale, prise à l'extrémité radialement externe, le talon s'étendant radialement vers l'extérieur à partir de la section transversale de tête qui présente un premier centre de gravité, le talon présentant un deuxième centre de gravité qui est défini dans un plan parallèle à la section transversale de tête, le deuxième centre de gravité étant décalé au moins transversalement du premier centre de gravité, le deuxième centre de gravité étant défini dans une zone prédéterminée délimitée au moins en partie par une première droite et une deuxième droite formant sensiblement un V qui est ouvert vers la surface intrados et qui comprend un sommet dont la projection orthogonale sur la section transversale de tête est située sur le premier centre de gravité.

Ainsi, cette solution permet d'atteindre l'objectif susmentionné. En particulier, un tel agencement du centre de gravité du talon permet de réduire les contraintes s'appliquant au bord de fuite de l'ordre de 10% en tenant compte des contraintes de fabrication de l'aube et du profil aérodynamique de l'aube. Ce profil d'aube est également plus performant et son bord de fuite peut être encore plus fin. Une telle aube peut également s'adapter à tout type de turbomachine sans qu'il ne soit nécessaire d'y apporter des modifications structurelles sur celle-ci pour l'intégration de l'aube.

L'aube comprend également l'une ou plusieurs des caractéristiques suivantes, prises seules ou en combinaison :

- la section transversale de tête est située radialement juste en dessous du talon.
- le premier centre de gravité est lié à un repère d'inertie comprenant un premier axe d'inertie et un deuxième axe d'inertie qui sont perpendiculaires et qui passent par le premier centre de gravité, la première droite étant inclinée suivant un premier angle par rapport au premier axe d'inertie et la deuxième droite étant inclinée suivant un deuxième angle par rapport au premier axe d'inertie.
- la zone prédéterminée est délimitée par une troisième droite qui est parallèle au premier axe d'inertie et qui est décalée vers la surface intrados d'une distance prédéterminée.
- la pale est pleine.
- l'aube comprend un pied situé à une extrémité radialement interne de la pale, opposée suivant la direction radiale à l'extrémité radialement interne, le bord de fuite présentant un premier épaississement localisé radialement entre une première plateforme du pied et la pale, et s'étendant au moins en partie transversalement de part et d'autre du bord de fuite.

- le talon comprend une deuxième plateforme qui est définie dans un plan incliné radialement vers l'extérieur et formant un angle compris entre 0° et 40° avec le plan de la section transversale de tête.
- le bord de fuite présente un deuxième épaississement localisé radialement entre la deuxième plateforme et la pale, et s'étendant au moins en partie transversalement de part et d'autre du bord de fuite.
- le premier épaississement et le deuxième épaississement comprennent chacun respectivement une section axiale de forme générale triangulaire.
- le premier épaississement et le deuxième épaississement s'étendent chacun respectivement depuis une des extrémités radialement interne et externe entre 10 et 30% de la hauteur radiale de la pale.
- la zone prédéterminée est délimitée par la ligne de squelette de la pale qui est coupée par la première droite et la deuxième droite.
- la zone prédéterminée est délimitée par une ligne courbe parallèle à la ligne de squelette de la pale, la ligne courbe étant située à une distance maximale correspondant à deux fois l'épaisseur transversale de la pale à partir de la surface extrados.

L'invention concerne également une roue d'une turbomachine comprenant un disque centré sur un axe longitudinal et une pluralité d'aubes présentant l'une quelconque des caractéristiques susmentionnées, s'étendant depuis la périphérie du disque et réparties régulièrement autour de l'axe longitudinal.

L'invention concerne également une turbomachine comprenant une aube ou une roue telle que susmentionnée.

Enfin, l'invention concerne un procédé d'optimisation d'un profil d'une aube de turbomachine d'aéronef, l'aube comprenant une pale, s'étendant suivant une direction radiale, avec un talon à une extrémité radialement externe et une section transversale de tête à l'extrémité radialement externe, le talon s'étendant radialement vers l'extérieur à partir de la section transversale de tête, le procédé comprenant les étapes suivantes :

- calcul d'un premier centre de gravité de la section transversale de tête de la pale,
- calcul d'un deuxième centre de gravité du talon ;
- comparaison des coordonnées du premier centre de gravité de section transversale de tête et du deuxième centre de gravité du talon ;
- mesure de la distance entre le premier et le deuxième centre de gravité suivant une projection orthogonale du plan dans lequel est défini le deuxième centre de gravité du talon dans le plan de la section transversale de tête ; et
- compensation dans laquelle le deuxième centre de gravité du talon est décalé au moins transversalement du premier centre du gravité de la section transversale de tête dans une zone prédéterminée, la zone prédéterminée étant délimitée au moins en partie par une première droite et une deuxième droite formant sensiblement un V qui est ouvert vers une surface intrados de la pale et qui comporte un sommet dont la projection orthogonale est située sur le premier centre de gravité.

Suivant le procédé, celui-ci comprend une étape de décalage d'un bord de fuite de la pale et/ou d'un bord d'attaque de la pale par rapport à un premier axe d'inertie d'un repère d'inertie.

Suivant le procédé, la section transversale de tête est située radialement juste en dessous du talon.

## Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :

[Fig. 1] La figure 1 représente un exemple de roue mobile comprenant un disque et des aubes s'étendant depuis la périphérie du disque ;

[Fig. 2] La figure 2 est une vue de côté d'un exemple d'aube de turbomachine selon l'invention ;

[Fig. 3] La figure 3 représente schématiquement une section transversale de tête d'une pale de turbomachine à une extrémité radialement externe juste en-dessous d'un talon d'aube selon l'invention ;

[Fig. 4] La figure 4 représente schématiquement un exemple d'agencement de zone prédéterminée dans laquelle est définie un centre de gravité d'un talon d'aube de turbomachine selon l'invention ;

[Fig. 5] La figure 5 est une vue en perspective et de détails d'un pied d'aube avec un épaississement au niveau du bord de fuite selon un mode de réalisation de l'invention ;

[Fig. 6] La figure 6 est une vue en perspective et de détails d'un pied d'aube avec un épaississement au niveau du bord de fuite selon un autre mode de réalisation de l'invention ;

[Fig. 7] La figure 7 est une vue de la pale d'une aube de turbomachine au niveau de son extrémité radialement externe

EP 3 983 651 B1

et qui comprend un épaississement au niveau du bord de fuite selon l'invention ; et
[Fig. 8] La figure 8 est une vue en perspective et de détails d'un talon d'aube de turbomachine avec un épaississement au niveau du bord de fuite selon l'invention.

**Description détaillée de l'invention**

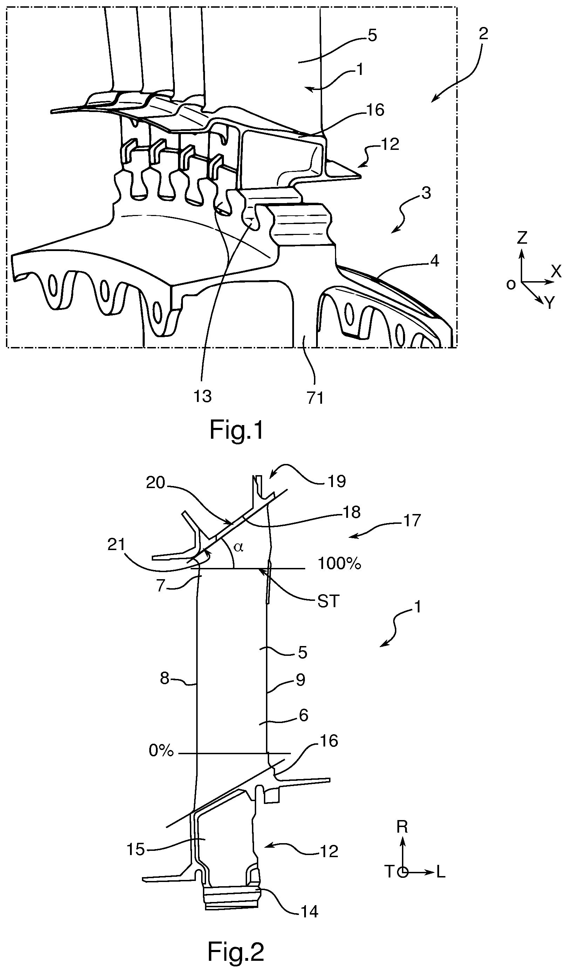

La figure 1 représente une aube 1 de turbine de turbomachine 2 d'axe longitudinal X pour aéronef et en particulier une aube pour une roue de turbine basse pression. Toutefois, l'aube pourrait être une aube de compresseur ou toute autre aube destinée à équiper une turbomachine.

Généralement une turbine comprend un ou plusieurs étages qui sont disposés successivement selon l'axe longitudinal X de la turbomachine. Chaque étage de turbine comprend une roue mobile 3 à aubes formant un rotor et une roue fixe à aubes formant un stator. Les aubes de ce stator sont désignées par le terme d'aube de distributeur. Chaque roue mobile 3 comprend un disque 4 annulaire tel qu'illustré sur la figure 1 qui est centré sur l'axe longitudinal. Une pluralité d'aubes mobiles 1 sont montées sur la périphérie du disque et sont réparties circonférentiellement et régulièrement autour du disque de la roue mobile. Chaque roue mobile 3 est agencée en aval d'une roue de distributeur.

Sur la figure 2, l'aube mobile 1 de turbomachine comprend une pale 5 aérodynamique qui s'étend suivant une direction radiale R entre une extrémité radialement interne 6 et une extrémité radialement externe 7. La pale 5 présente une hauteur radiale qui est déterminée entre 0% à l'extrémité radialement interne et 100% à l'extrémité radialement externe.

Dans la présente description, l'aube sera décrite par rapport à des directions radiales R, longitudinales L et transversales T alors que la turbomachine sera décrite par rapport aux axes longitudinal X, radial Z et transversal Y. Les directions sont perpendiculaires entre elles. Les axes sont également perpendiculaires entre eux et forment un repère orthonormé OXYZ, avec O l'origine du repère. L'origine du repère est centré sur l'axe longitudinal de la turbomachine. En situation d'installation, la direction radiale est parallèle à l'axe radial.

Par ailleurs, les termes « amont », « aval », « axial », « axialement » sont définis par rapport au sens de circulation des gaz dans la turbomachine et aussi sensiblement suivant l'axe ou la direction longitudinal(e). De même, les termes « radialement », « interne » et externe » sont définis par rapport à l'axe radial ou à la direction radiale.

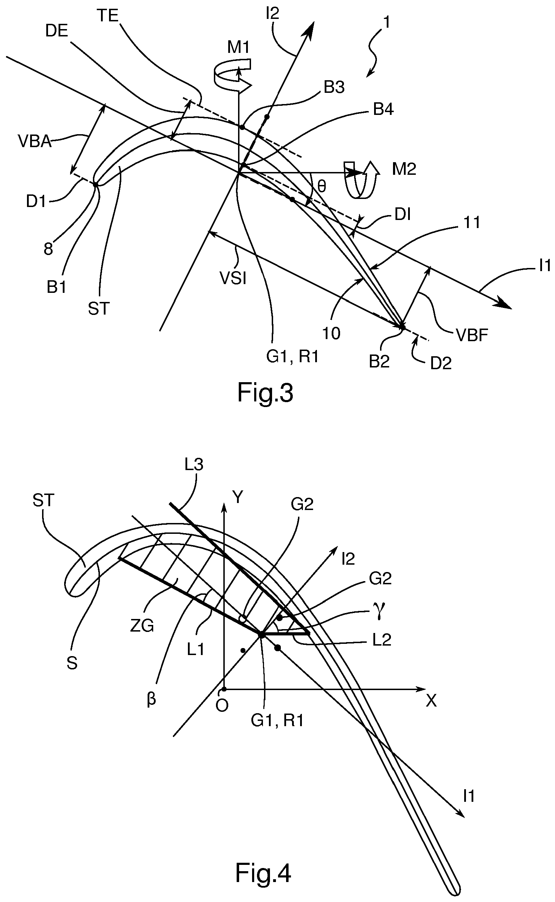

La pale 5 comprend un bord d'attaque 8 et un bord de fuite 9 qui sont opposées, ici suivant la direction longitudinale de la pale. Chaque pale est disposée dans le flux aérodynamique de sorte que le bord d'attaque 8 est placé en amont du bord de fuite 9. Le bord d'attaque 8 et le bord de fuite 9 sont reliées par une surface intrados 10 et une surface extrados 11 (cf. figure 3) qui sont opposées suivant la direction transversale.

Le profil de l'aube est incurvé et celle-ci présente une épaisseur transversale qui varie du bord d'attaque au bord de fuite. Dans le présent exemple, la pale de l'aube est pleine. C'est-à-dire que la pale ne présente pas de cavités à l'intérieur de celle-ci.

L'aube est avantageusement réalisée dans un matériau métallique ou un alliage métallique tel qu'un alliage à base de Nickel. Un exemple d'alliage à base de Nickel est connu sous la dénomination DS200®.

En référence aux figures 1 et 2, la pale comprend à son extrémité radialement interne 6 un pied 12 qui est destiné à s'engager dans une rainure 13 de forme correspondante du disque 4. Ce dernier comprend à cet effet une pluralité de rainures 13 réparties régulièrement sur sa périphérie. Le pied 12 comprend en particulier une partie radialement interne présentant une épaisseur importante par rapport au reste du pied et qui est nommée bulbe 14. Ce dernier est logé dans la rainure 13. Le pied 12 comprend également une échasse 15 qui s'étend radialement depuis le bulbe 14. Typiquement, l'échasse 15 est reliée au bulbe via un col.

Le pied 12 comprend également une première plateforme 16 qui sépare la pale du pied 12. La première plateforme 16 définit en particulier une portion de paroi radialement interne délimitant une veine de turbomachine dans laquelle circule un flux aérodynamique, ici un flux primaire. L'échasse 15 s'étend radialement entre la plateforme 16 et le bulbe 14.

La pale 5 comprend à son extrémité radialement externe 7 un talon 17. Comme nous pouvons le voir sur la figure 2, le talon 17 comprend typiquement une deuxième plateforme 18 destinée à former une portion de paroi radialement externe qui délimite également la veine aérodynamique (ici veine primaire). Les parois radialement interne et externe sont opposées radialement. Le talon 17 est pourvu de léchettes 19 qui s'étendent radialement depuis une surface radialement externe 20 de la plateforme. Une surface radialement interne 21 est opposée à la surface radialement externe et est orientée généralement vers le pied de l'aube.

En fonctionnement, chaque aube est soumise à, d'une part à des efforts aérodynamiques dus à la circulation du flux gazeux traversant la turbine et les aubes, et d'autres part à des efforts centrifuges dus à la rotation du disque de turbine l'aube autour de l'axe longitudinal.

Sur la figure 3 est représentée une section transversale de tête ST de la pale à 100% de la hauteur de la pale (soit à l'extrémité radialement externe) (et en particulier où le talon est relié immédiatement directement à la pale) comme cela est représenté sur la figure 2. Nous comprenons que le talon s'étend radialement vers l'extérieur à partir de la section transversale de tête. La section transversale de tête est définie dans un premier plan perpendiculaire à la direction radiale de la pale. Cette section transversale de tête ST présente un premier centre de gravité G1 (associée à une masse) qui a été déterminée préalablement dans le repère O,X,Y,Z (repère de la turbomachine). Est représenté également un repère d'inertie de la section transversale de tête comprenant un premier axe d'inertie I1 (petit axe d'inertie) et un deuxième axe d'inertie I2 (grand axe d'inertie) dont l'origine R1 est centré sur le premier centre de gravité G1 de la section transversale de tête. Ces premier et deuxième axes d'inertie sont perpendiculaires.

En référence à la figure 3, le premier centre de gravité G1 de la section transversale de tête ST est agencée une première distance prédéterminée (telle que à environ 6 mm) d'une droite D1 définie dans le premier plan de la section de tête, tangent avec le bord d'attaque au point B1 et parallèle au premier axe d'inertie I1. En d'autres termes, le bord d'attaque est à une distance VBA de l'ordre de +6 mm du premier axe d'inertie.

Le premier centre de gravité G1 de la section transversale de tête ST est également situé à une deuxième distance prédéterminée (telle que à environ 5 mm) d'une droite D2 définie dans le premier plan de la section transversale de tête, tangent avec le bord de fuite 9 au point B2 et parallèle au premier axe d'inertie I1. Le bord de fuite est à une distance VBF de l'ordre de 5 mm du premier axe d'inertie I1. De même, le bord de fuite est situé à une distance VSI de l'ordre de 16 mm du premier axe d'inertie I1.

Sur la figure 3, nous pouvons voir également qu'une droite TE tangente à la surface extrados 11 à un point B3, parallèle au premier axe d'inertie I1, est situé à une distance DE d'environ 3 mm du premier centre de gravité G1. Le deuxième axe d'inertie I2 coupe la surface intrados 10 en un point B4 situé à une distance DI d'environ 0,6 mm du premier centre de gravité G1.

La pale 5 subit une contrainte notamment à son bord de fuite 9 qui est principalement due aux moments de flexion (M1 et M2) créés par les efforts aérodynamique et centrifuge ainsi qu'à la traction (Fz) due à l'effort centrifuge. Cette contrainte peut se traduire par l'équation de résistance des matériaux ci-dessous :

[Math 1]

$$\sigma = \frac{Fz}{S} - \frac{M1}{I1}X2 - \frac{M2}{I2}X1$$

Avec

- $F_z$ : correspondant à l'effort de traction induit par la rotation de la pale.
- M1 et M2 : correspondant respectivement aux moments de flexion dus aux efforts aérodynamique et centrifuge dans le repère d'inertie de la section transversale de tête à 100% de hauteur de la pale.
- S : est la section transversale de la pale au niveau de la tête.
- X1 : correspond à la distance (VBF) entre un point B2 sur le bord de fuite 9 et le premier axe I1.
- X2 : correspond à la distance (VSI) entre le bord de fuite 9 et le deuxième axe I2.

Cette équation est appliquée, avantageusement, au niveau des bords d'attaque et de fuite de la section transversale de tête la pale.

La répartition de matière de la pale dans la section transversale de tête ST est plus importante autour du deuxième axe d'inertie qu'autour du premier axe d'inertie.

Afin de limiter, voire d'éliminer ou reporter ailleurs les contraintes qui s'appliquent sur le bord de fuite ici fin (épaisseur relativement fine par rapport à un bord de fuite d'une aube classique), l'aube présente un profil ou une géométrie optimisée. En effet, le bord de fuite 9 présente par exemple une épaisseur transversale de 0.30 mm, voire de 0.20 mm à partir d'une distance axiale de 1 mm depuis le bord de fuite.

A cet effet et en référence à la figure 4, le talon (associé à une masse) est configuré de manière à présenter un deuxième centre de gravité G2 qui est défini dans un deuxième plan (sensiblement perpendiculaire à la direction radiale) qui est parallèle au premier plan de la section transversale de tête. En particulier, le deuxième centre de gravité G2 est décalé au moins transversalement du premier centre de gravité G1 de la section transversale de tête ST qui se situe à l'extrémité radialement externe (soit à 100% de la hauteur de la pale suivant la direction radiale).

De manière avantageuse, mais non limitativement, le deuxième centre de gravité du talon est défini dans une zone prédéterminée ZG qui est située en amont de la pale et à proximité de la surface intrados 10 de la section transversale de tête. La zone prédéterminée est également définie dans le plan du deuxième centre de gravité. Plus précisément encore, la zone prédéterminée est située en amont d'un plan médian de la section transversale de tête qui est parallèle au deuxième axe d'inertie et qui comprend la direction radiale. Placer le centre de gravité du talon dans une telle zone permet de diminuer les contraintes au bord de fuite de la pale.

Comme cela est visible précisément sur la figure 4, la zone prédéterminée ZG est représentée hachurée est délimitée au moins en partie, suivant un projection orthogonale du plan comprenant le centre de gravité G2 du talon dans le plan de la section transversale de tête ST, par une première droite L1 et une deuxième droite L2 formant sensiblement un V ouvert vers la surface intrados 10 et dont le sommet est situé sur le centre de gravité de la section transversale de tête ST.

La première droite L1 est inclinée d'un premier angle β (bêta) par rapport au premier axe d'inertie I1 et passe par le premier centre de gravité G1 la section transversale de tête ST. Ce premier angle est compris entre 1 et 10°.

La deuxième droite L2 est inclinée d'un deuxième angle y (gamma) par rapport au deuxième axe d'inertie I2 et passe par le centre de gravité G1 de la section transversale de tête ST. La deuxième droite L2 est aussi parallèle à l'axe longitudinal X comme nous pouvons le voir sur la figure 4. Le deuxième angle γ que forme la deuxième droite L2 avec le deuxième axe d'inertie est compris avantageusement entre 35° et 50°.

La zone prédéterminée ZG est également délimitée au moins en partie par une troisième droite L3 qui est parallèle au premier axe d'inertie. Cette troisième droite L3 est située à une distance du premier axe d'inertie (vers la surface extrados) qui est comprise entre 0 et 1 mm suivant la géométrie de l'aube et des étages de la turbine.

Nous pouvons également voir sur la figure 4 que la zone prédéterminée ZG est délimitée en amont par la ligne de squelette S de la pale courbe qui coupe la première droite L1 et la deuxième droite L2.

Plus généralement, la zone prédéterminée ZG est délimitée par :

- la première droite L1,
- la deuxième droite L2 qui forme sensiblement un V ouvert vers la surface intrados 10, la projection orthogonale du sommet du V sur la section transversale de tête est située sur le premier centre de gravité G1,
- et une ligne courbe parallèle à la ligne de squelette qui est située à une distance maximale correspondant à deux fois l'épaisseur transversale de la pale à partir de la surface extrados. Cette ligne courbe coupe la première droite et la deuxième droite et est une borne maximale de la zone prédéterminée ZG au-delà de la surface extrados.

La plateforme 18 du talon 17 est définie dans un plan incliné radialement vers l'extérieur. Ledit plan forme un angle α (alpha) qui est compris entre 0° et 40° avec le plan de la section transversale de tête. L'angle simplifie la modélisation par calcule ce qui évite le travail de sections non entières et/ou inclinées. Cet angle dépend de la forme de la veine de la turbine mais aussi de la géométrie de la pale.

Avantageusement, pour un talon pesant entre 10 et 20 g, la troisième droite L3 est décalée du premier axe d'inertie d'une distance comprise entre 0 et 0.3 mm avec une plateforme inclinée entre 20 et 30° par rapport au plan de la section transversale de tête. Alternativement, la troisième droite est à une distance comprise entre 0 et 1 mm avec une plateforme inclinée entre 0 et 20° par rapport au plan de la section de tête.

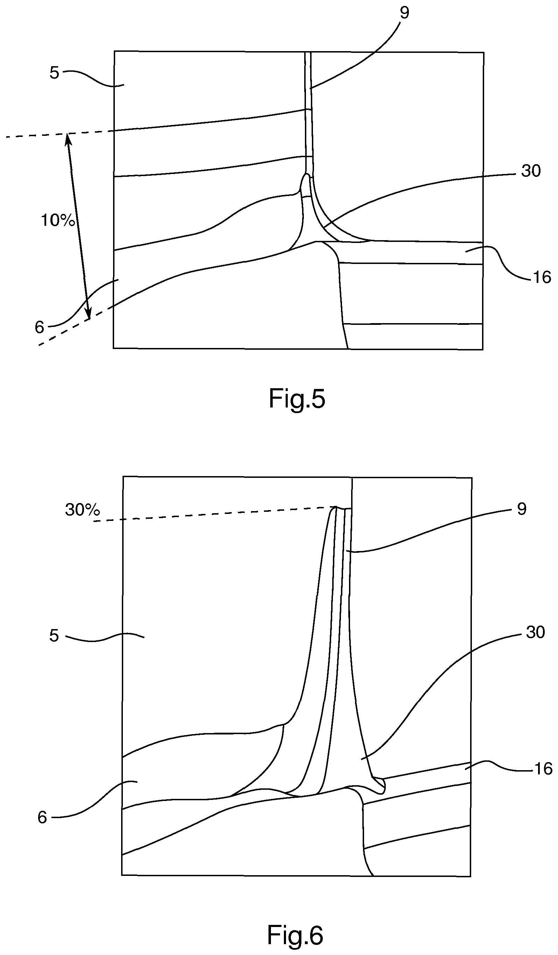

Une autre possibilité ou complément pour réduire la contrainte au niveau du bord de fuite est d'optimiser le profil du bord de fuite localement. En référence à la figure 5, le bord de fuite 9 présente un premier épaississement 30 localisé entre la plateforme du pied et la pale et qui s'étend au moins en partie transversalement de part et d'autre du bord de fuite. Cet épaississement 30 s'étend également sur 10% de la hauteur de la pale depuis l'extrémité radialement interne 6. L'épaississement ou la surépaisseur est de l'ordre de 0.05 mm (suivant la direction transversale). L'épaississement présente avantageusement une section axiale sensiblement triangulaire.

Suivant un autre mode de réalisation illustré sur la figure 6, le premier épaississement 30 est localisé entre la plateforme 16 du pied et le bord de fuite 9 de la pale. Le premier épaississement 30 s'étend d'une part transversalement de part et d'autre du bord de fuite et d'autre part sur une hauteur radiale jusqu'à environ 30% de la hauteur de la pale.

L'ajout de cet épaississement au bord de fuite et au niveau de l'extrémité radialement interne de la pale permet une réduction de contrainte entre 2 et 7%. Cet épaississement permet également de faciliter la fabrication de la pale avec le bord de fuite fin. Cette géométrie permet aussi par ailleurs, de limiter le risque d'abattement du matériau. L'abattement risque alors de se produire dans une zone moins contrainte qu'à l'origine et permet de gagner entre 10 et 20% de marge sur certains matériaux.

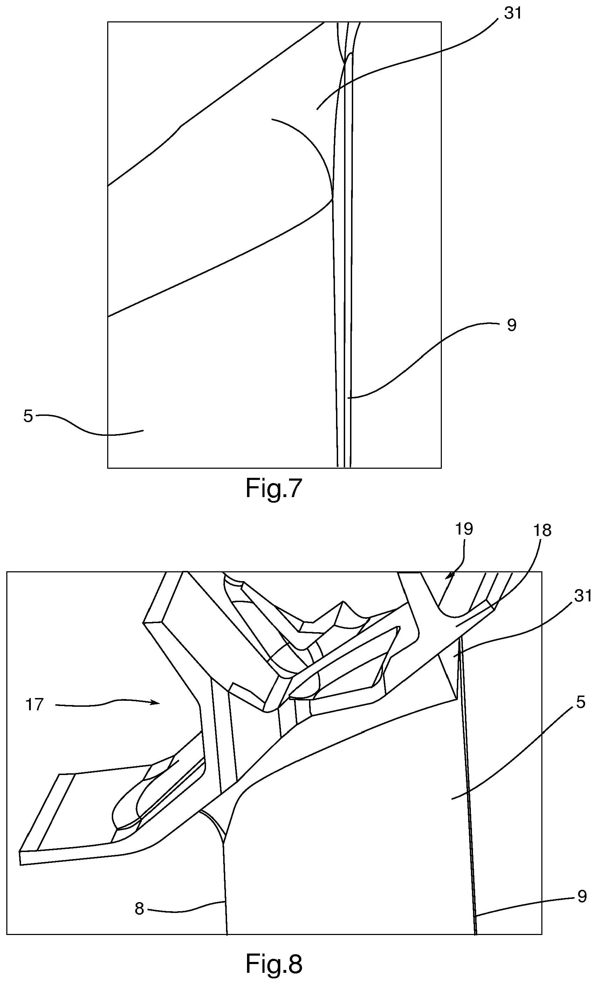

Comme nous pouvons le voir précisément sur les figures 7 et 8, le bord de fuite présente également un deuxième épaississement 31 qui est localisé sur le bord de fuite à l'extrémité radialement externe, soit à proximité de la plateforme du talon. Cet épaississement 31 présente les mêmes configurations que celles du premier épaississement, c'est-à-dire une hauteur comprise entre 10% et 30 % depuis l'extrémité radialement externe et une extension transversale de part et d'autre du bord de fuite.

La détermination du centre de gravité du talon est obtenue au moyen d'un procédé d'optimisation d'un profil d'une aube de turbomachine d'aéronef. Les différentes étapes du procédé sont mises en œuvre au moyen d'un logiciel de conception du type CAO/DAO et/ou de calcul.

Dans un premier temps, les caractéristiques de l'aube telle que sa masse, le matériau, ses dimensions, etc, sont référencées dans le logiciel.

Dans une première étape, la pale 5 est divisée en plusieurs sections transversales (horizontales) suivant sa hauteur radiale.

La section transversale de tête de pale à l'extrémité radiale externe (et située juste avant le rayon du talon, à 100% de la hauteur de la pale) est sélectionnée.

Le procédé comprend ensuite une étape de calcul du centre de gravité G1 de la section transversale de tête ST. Préalablement à cette étape de calcul, une masse est associée à la section transversale de tête ST. Le centre de gravité G1 est défini comme étant le barycentre géométrique de la section transversale de tête.

Les coordonnées du centre de gravité G1 sont définies, dans le plan de la section transversale de tête, par rapport au repère d'inertie comprenant le premier axe d'inertie I1 et le deuxième axe d'inertie I2 dont l'origine R1 est située sur le centre de gravité G1 de la section transversale de tête.

Le procédé comprend encore une étape de calcul du centre de gravité du talon de l'aube. Préalablement à cette étape, la masse du talon de l'aube est mesurée ce qui permet de déterminer son centre de gravité.

Une comparaison des coordonnées entre le centre de gravité G1 de la section transversale de tête ST et le centre de gravité G2 du talon 17 est réalisée.

Pour cela, une mesure de la distance entre le premier et le deuxième centre de gravité G1, G2 est réalisée. A cette fin, une projection orthogonale du plan du talon comprenant le centre de gravité G2 de celui est réalisée dans le plan de la section transversale de tête ST.

Enfin le procédé comprend une étape de compensation dans laquelle le deuxième centre de gravité du talon est décalé du premier centre de gravité de la section de tête dans la zone prédéterminée. L'étape de compensation comprend un décalage au moins transversal et axial du centre de gravité G2 du talon dans la zone prédéterminée pour réduire les contraintes aérodynamiques s'appliquant sur le bord de fuite relativement fin.

Typiquement une fois comparé, si le centre de gravité G2 du talon n'est pas dans la zone prédéterminée ZG, au moins en partie en forme de V, une modification de la répartition de masse du talon est réalisée pour faire avancer ou reculer le centre de gravité G2 du talon. Cette opération est avantageusement manuelle (dans le logiciel de conception) et dépend bien entendu des critères de fabrication et d'intégration de l'aube.

Pour compenser les contraintes au bord de fuite relativement fin de la pale, nous pouvons également ajuster manuellement la distance du bord d'attaque et/ou du bord de fuite par rapport au premier axe d'inertie. Pour cela, nous positionnons les sections transversales de pale les unes par rapport aux autres suivant la direction radiale afin de limiter le moment entre celles-ci. En ajustant manuellement les valeurs de $\delta^{Ax}$ et $\delta^{Tg}$ (de la formule ci-dessous) par rapport au premier axe d'inertie, le décalage est réalisé et donc le moment est créée. Dans le cas du bord de fuite fin, nous cherchons à modifier le décalage pour diminuer les contraintes au bord de fuite.

La formule ci-dessous caractérise la contrainte $\sigma_{BF}$ au bord de fuite selon le premier axe d'inertie I1. Cette formule caractérise la compensation au bord d'attaque et/ou au bord de fuite comme énoncé ci-dessus.

[Math 2]

$$\sigma_{BF} = \frac{F_z}{S} - \frac{V_{BF}}{I_1} \times \left[ \cos(\theta) \times \left( M_{aero}^{Ax} + \delta^{Ax} \times F^c \right) - \sin(\theta) \times \left( M_{aero}^{Tg} + \delta^{Tg} \times F^c \right) \right]$$

Avec:

- Fz : Force de traction induite par la force centrifuge.
- $F^c$ : force centrifuge.
- S : section transversale de tête.
- $V_{BF}$ : de la distance du point du bord de fuite par rapport à au premier axe d'inertie I1,
- $M^{Ax}$ aero : M1 dans le repère d'inertie.
- Angle de calage θ (theta) : angle d'inclinaison de la plateforme entre le repère de la turbomachine et le repère d'inertie.
- $M^{Tg}$ aero : M2 dans le repère d'inertie.
- $\delta^{Ax}$ : concerne le décalage axial du bord de fuite.
- $\delta^{Tg}$ : concerne le décalage tangentiel du bord de fuite.

Lorsque la distance VBA du bord d'attaque au premier axe d'inertie I1 est inférieure à la distance VBF du bord de fuite au premier axe d'inertie I1, nous appliquons par exemple une compensation axiale (ou valeur de déplacement dans le sens axial ($\delta^{Ax}$)) du bord d'attaque en amont d'environ 1 mm et du bord d'attaque en aval environ 5 mm par rapport à l'axe d'inertie I1. C'est-à-dire que nous réduisons ou augmentons la distance des bords de fuite ou d'attaque du premier axe d'inertie I1. Afin d'atteindre une compensation du moment axial plus importante, nous pouvons réaliser un décalage axial du bord d'attaque d'environ 2 mm vers l'amont et un décalage axial du bord de fuite vers l'aval de l'ordre de 6 mm.

Lorsque la distance VBA du bord d'attaque est supérieure à la distance VBF du bord de fuite, nous appliquons une valeur de déplacement axial des bords d'attaque et des bords de fuite relativement importante et/ou un déplacement tangentiel. Dans ce cas, il est possible de minimiser la contrainte au bord de fuite.

**Revendications**

1. Aube (1) de turbomachine d'aéronef comprenant une pale (5) s'étendant suivant une direction radiale, la pale présentant une surface intrados (10) et une surface extrados (12) qui sont reliées en amont, suivant un sens de circulation d'un gaz dans la turbomachine, par un bord d'attaque (8) et en aval par un bord de fuite (9), la pale ayant à une extrémité radialement externe (7) un talon (17) et comportant une section transversale de tête (ST), dans un premier plan perpendiculaire à la direction radiale de la pale, prise à l'extrémité radialement externe (7), le talon s'étendant radialement vers l'extérieur à partir de la section transversale de tête qui présente un premier centre de gravité (G1), le talon (17) présentant un deuxième centre de gravité (G2) qui est défini dans un deuxième plan parallèle au premier plan de la section transversale de tête (S1), **caractérisée en ce que** le deuxième centre de gravité est décalé au moins transversalement du premier centre de gravité, le deuxième centre de gravité (G2) étant défini dans une zone prédéterminée (ZG) délimitée au moins en partie par une première droite (L1) et une deuxième droite (L2) formant sensiblement un V qui est ouvert vers la surface intrados (10) et qui comprend un sommet dont la projection orthogonale sur la section transversale de tête est située sur le premier centre de gravité (G1).

2. Aube (1) selon la revendication précédente, **caractérisée en ce que** le premier centre de gravité (G1) est lié à un repère d'inertie comprenant un premier axe d'inertie (I1) et un deuxième axe d'inertie (I2) qui sont perpendiculaires et qui passent par le premier centre de gravité, la première droite (L1) étant inclinée suivant un premier angle par rapport au premier axe d'inertie (I1) et la deuxième droite (L2) étant inclinée suivant un deuxième angle par rapport au premier axe d'inertie (I2).

3. Aube (1) selon la revendication précédente, **caractérisée en ce que** le premier centre de gravité (G1) est agencée à :

   - une première distance prédéterminée d'une troisième droite (D1), définie dans le premier plan de la section transversale de tête, qui est tangent avec le bord d'attaque (8) au niveau d'un point (B1) et parallèle au premier axe d'inertie (I1) et d'une deuxième distance prédéterminée, et
   - à une deuxième distance prédéterminée d'une quatrième droite (D2) dans le premier plan de la section transversale de tête qui est tangent avec le bord de fuite (9) au niveau d'un point (B2) et parallèle au premier axe d'inertie (I1).

4. Aube (1) selon l'une des revendications précédentes, **caractérisée en ce que** la zone prédéterminée (ZG) est délimitée par une troisième droite (L3) qui est parallèle au premier axe d'inertie (I1) et décalée vers la surface intrados (10) d'une distance prédéterminée.

5. Aube (1) selon l'une quelconque des revendications précédentes, **caractérisée en ce que** l'aube est mobile et la pale (5) est pleine.

6. Aube (1) selon l'une quelconque des revendications précédentes, **caractérisée en ce que** l'aube comprend un pied (12) situé à une extrémité radialement interne (6) de la pale, opposée suivant la direction radiale à l'extrémité radialement externe (7), le bord de fuite (9) présentant un premier épaississement (30) localisé radialement entre une première plateforme (16) du pied et la pale, et s'étendant transversalement de part et d'autre du bord de fuite (9).

7. Aube (1) selon l'une quelconque des revendications précédentes, **caractérisée en ce que** le talon (17) comprend une deuxième plateforme (18) qui est définie dans un plan incliné radialement vers l'extérieur et formant un angle compris entre 0° et 40° avec le plan de la section transversale de tête.

8. Aube (1) selon la revendication précédente, **caractérisée en ce que** le bord de fuite (9) présente un deuxième épaississement (31) localisé entre la deuxième plateforme (18) et la pale et s'étendant au moins en partie transversalement de part et d'autre du bord de fuite.

9. Aube (1) selon l'une des revendications 6 à 8, **caractérisée en ce que** le premier épaississement (30) et le deuxième épaississement (31) comprennent chacun respectivement une section axiale de forme générale triangulaire.

10. Aube (1) selon l'une des revendications 6 à 8, **caractérisée en ce que** le premier épaississement (30) et le deuxième épaississement (31) s'étendent chacun respectivement depuis une des extrémités radialement interne et externe entre 10 et 30% de la hauteur radiale de la pale.

11. Aube (1) selon l'une quelconque des revendications précédentes, **caractérisée en ce que** la zone prédéterminée est délimitée par la ligne de squelette de la pale qui est coupée par la première droite et la deuxième droite.

12. Aube (1) selon l'une des revendications précédentes, **caractérisée en ce que** la zone prédéterminée est délimitée par une ligne courbe parallèle à la ligne de squelette de la pale, la ligne courbe étant située à une distance maximale correspondant à deux fois l'épaisseur transversale de la pale à partir de la surface extrados.

13. Roue mobile d'une turbomachine comprenant un disque (4) centré sur un axe longitudinal X et une pluralité d'aubes (1), selon l'une quelconque des revendications 1 à 12, s'étendant depuis la périphérie du disque et réparties régulièrement autour de l'axe longitudinal.

14. Turbomachine (2) comprenant une aube (1) selon l'une quelconque des revendications 1 à 12 ou une roue selon la revendication précédente.

15. Procédé d'optimisation d'un profil d'une aube de turbomachine d'aéronef, l'aube comprenant une pale (5) avec un talon (17), , s'étendant suivant une direction radiale, à une extrémité radialement externe (7) et une section transversale de tête (ST) à l'extrémité radialement externe, le talon (17) s'étendant radialement vers l'extérieur à partir de la section transversale de tête (ST), le procédé comprenant les étapes suivantes :

   - calcul d'un premier centre de gravité (G1) de la section transversale de tête de la pale,
   - calcul d'un deuxième centre de gravité (G2) du talon (17) ;
   - comparaison des coordonnées du premier centre de gravité (G1) de section transversale de tête et du deuxième centre de gravité (G2) du talon ;
   - mesure de la distance entre le premier et le deuxième centre de gravité suivant une projection orthogonale du plan dans lequel est défini le deuxième centre de gravité du talon dans le plan de la section transversale de tête ; et
   - compensation dans laquelle le deuxième centre de gravité du talon est décalé au moins transversalement, du premier centre du gravité de la section transversale de tête dans une zone prédéterminée (ZG), la zone prédéterminée (ZG) étant délimitée au moins en partie par une première droite et une deuxième droite formant sensiblement un V qui est ouvert vers une surface intrados de la pale et qui comporte un sommet dont la projection orthogonale est située sur le premier centre de gravité.

## Patentansprüche

1. Schaufel (1) eines Turbotriebwerks eines Flugzeugs, umfassend ein Blatt (5), das sich in einer radialen Richtung erstreckt, wobei das Blatt eine Innenseite (10) und eine Außenseite (12) aufweist, die in einer Strömungsrichtung eines Gases im Turbotriebwerk stromaufwärts durch eine Angriffskante (8) und stromabwärts durch eine Abströmkante (9) miteinander verbunden sind, wobei das Blatt an einem radial äußeren Ende (7), in einer ersten Ebene senkrecht zur radialen Richtung des Blatts vom radial äußeren Ende (7) aus betrachtet, ein Band (17) aufweist und einen Vorderseitenquerschnitt (ST) umfasst, wobei sich das Band ausgehend vom Vorderseitenquerschnitt, der einen ersten Schwerpunkt (G1) aufweist, radial nach außen erstreckt, wobei das Band (17) einen zweiten Schwerpunkt (G2) aufweist, der in einer zweiten Ebene parallel zur ersten Ebene des Vorderseitenschwerpunkts (S1) gebildet ist, **dadurch gekennzeichnet, dass** der zweite Schwerpunkt mindestens querverlaufend vom ersten Schwerpunkt versetzt ist, wobei der zweite Schwerpunkt (G2) in einem vorbestimmten Bereich (ZG) gebildet ist, der zumindest teilweise durch eine erste Gerade (L1) und eine zweite Gerade (L2) abgegrenzt ist, die im Wesentlichen ein V formen, das zur Innenseite (10) offen ist und das einen Scheitelpunkt umfasst, dessen orthogonale Projektion auf den Vorderseitenquerschnitt sich auf dem ersten Schwerpunkt (G1) befindet.

2. Schaufel (1) nach dem vorstehenden Anspruch, **dadurch gekennzeichnet, dass** der erste Schwerpunkt (G1) mit einer Trägheitsstelle verbunden ist, die eine erste Trägheitsachse (I1) und eine zweite Trägheitsachse (I2) umfasst, die senkrecht zueinander sind und durch den ersten Schwerpunkt verlaufen, wobei die erste Gerade (L1) in einem ersten Winkel in Bezug auf die erste Trägheitsachse (I1) geneigt ist und die zweite Gerade (L2) in einem zweiten Winkel in Bezug auf die erste Trägheitsachse (I2) geneigt ist.

3. Schaufel (1) nach dem vorstehenden Anspruch, **dadurch gekennzeichnet, dass** der erste Schwerpunkt (G1) wie folgt eingerichtet ist:

   - in einem vorbestimmten ersten Abstand von einer dritten Gerade (D1), die in der ersten Ebene des ersten Vorderseitenquerschnitts gebildet ist, die die Angriffskante (8) an einem Punkt (B1) tangiert und parallel zur ersten Trägheitsachse (I1) und zu einem vorbestimmten zweiten Abstand ist; und

- in einem vorbestimmten zweiten Abstand von einer vierten Gerade (D2), die in der ersten Ebene des ersten Vorderseitenquerschnitts gebildet ist, die die Abströmkante (9) an einem Punkt (B2) tangiert und parallel zur ersten Trägheitsachse (I1) ist.

4. Schaufel (1) nach einem der vorstehenden Ansprüche, **dadurch gekennzeichnet, dass** der vorbestimmte Bereich (ZG) durch eine dritte Gerade (L3) abgegrenzt ist, die parallel zur ersten Trägheitsachse (I1) ist und um einen vorbestimmten Abstand zur Innenseite (10) hin versetzt ist.

5. Schaufel (1) nach einem der vorstehenden Ansprüche, **dadurch gekennzeichnet, dass** die Schaufel bewegbar ist und das Blatt (5) voll ist.

6. Schaufel (1) nach einem der vorstehenden Ansprüche, **dadurch gekennzeichnet, dass** die Schaufel einen Fuß (12) umfasst, der sich an einem radial inneren Ende (6) des Blatts befindet, in der radialen Richtung dem radial äußeren Ende (7) gegenüberliegend, wobei die Abströmkante (9) eine erste Verdichtung (30) aufweist, die radial zwischen einer ersten Plattform (16) des Fußes und dem Blatt gelegen ist und sich querverlaufend beiderseits der Abströmkante (9) erstreckt.

7. Schaufel (1) nach einem der vorstehenden Ansprüche, **dadurch gekennzeichnet, dass** das Band (17) eine zweite Plattform (18) umfasst, die in einer Ebene gebildet ist, die radial nach außen geneigt ist und einen Winkel zwischen 0° und 40° mit der Ebene des Vorderseitenquerschnitts formt.

8. Schaufel (1) nach dem vorstehenden Anspruch, **dadurch gekennzeichnet, dass** die Abströmkante (9) eine zweite Verdickung (31) aufweist, die zwischen der zweiten Plattform (18) und dem Blatt gelegen ist und sich zumindest teilweise querverlaufend beiderseits der Abströmkante erstreckt.

9. Schaufel (1) nach einem der Ansprüche 6 bis 8, **dadurch gekennzeichnet, dass** die erste Verdickung (30) und die zweite Verdickung (31) jeweils einen jeweiligen axialen Abschnitt mit einer im Allgemeinen dreieckigen Form umfasst.

10. Schaufel (1) nach einem der Ansprüche 6 bis 8, **dadurch gekennzeichnet, dass** sich die erste Verdickung (30) und die zweite Verdickung (31) jeweils ausgehend von einem jeweiligen der radial inneren und äußeren Enden zwischen 10 und 30% der radialen Höhe des Blatts erstreckt.

11. Schaufel (1) nach einem der vorstehenden Ansprüche, **dadurch gekennzeichnet, dass** der vorbestimmte Bereich durch die Skelettlinie des Blatts abgegrenzt wird, die durch die erste Gerade und die zweite Gerade geschnitten wird.

12. Schaufel (1) nach einem der vorstehenden Ansprüche, **dadurch gekennzeichnet, dass** der vorbestimmte Bereich durch eine gekrümmte Linie parallel zur Skelettlinie des Blatts abgegrenzt wird, wobei sich die gekrümmte Linie in einem maximalen Abstand befindet, der ausgehend von der Außenseite dem Zweifachen der querverlaufenden Dicke entspricht.

13. Bewegbares Rad eines Turbotriebwerks, umfassend eine Scheibe (4), die auf einer Längsachse X zentriert ist, und eine Vielzahl von Schaufeln (1) nach einem der Ansprüche 1 bis 12, die sich ausgehend vom Umfang der Scheibe erstrecken und regelmäßig um die Längsachse verteilt sind.

14. Turbotriebwerk (2), das mindestens eine Schaufel (1) nach einem der Ansprüche 1 bis 12 und/oder ein Rad nach dem vorstehenden Anspruch umfasst.

15. Verfahren zur Optimierung eines Schaufelprofils eines Turbotriebwerks eines Flugzeugs, wobei die Schaufel ein Blatt (5) mit einem Band (17), das sich in einer radialen Richtung erstreckt, ein radial äußeres Ende (7) und einen querverlaufenden Vorderseitenquerschnitt (ST) am radial äußeren Ende umfasst, wobei sich das Band ausgehend vom Vorderseitenquerschnitt (ST) radial nach außen erstreckt, wobei das Verfahren die folgenden Schritte umfasst:

- Berechnen eines ersten Schwerpunkts (G1) des querverlaufenden Vorderseitenquerschnitts des Blatts,
- Berechnen eines zweiten Schwerpunkts (G2) des Bandes (17);
- Vergleich der Koordinaten des ersten Schwerpunkts (G1) des Vorderseitenquerschnitts und des zweiten Schwerpunkts (G1) des Bandes;
- Messung des Abstandes zwischen dem ersten und dem zweiten Schwerpunkt in einer orthogonalen Projektion der Ebene, wobei der zweite Schwerpunkt des Bandes in einer Ebene des Vorderseitenquerschnitts gebildet ist; und

- Ausgleich, wobei der zweite Schwerpunkt des Bandes zumindest querverlaufend vom ersten Schwerpunkt des querverlaufenden Vorderseitenquerschnitts in einem vorbestimmten Bereich (ZG) versetzt ist, wobei der vorbestimmte Bereich (ZG) zumindest teilweise durch eine erste Gerade und eine zweite Gerade abgegrenzt ist, die im Wesentlichen ein V formen, das zu einer Innenseite des Blatts offen ist und das einen Scheitelpunkt umfasst, dessen orthogonale Projektion sich auf dem ersten Schwerpunkt befindet.

**Claims**

1. A vane (1) for a turbine engine of an aircraft comprising a blade (5) extending in a radial direction, the blade having a pressure side surface (10) and a suction side surface (12) which are connected upstream, in a direction of circulation of a gas in the turbine engine, by a leading edge (8) and downstream by a trailing edge (9), the blade having, at a radially outer end (7), a root (17) and comprising a transverse head section (ST), in a first plane perpendicular to the radial direction of the blade, taken at the radially outer end (7), the root extending radially towards the outside from the transverse head section which has a first centre of gravity (G1), the root (17) having a second centre of gravity (G2) which is defined in a second plane parallel to the first plane of the transverse head section (S1), **characterized in that** the second centre of gravity is offset at least transversely from the first centre of gravity, the second centre of gravity (G2) being defined in a predetermined zone (ZG) delimited at least in part by a first straight line (L1) and a second straight line (L2) substantially forming a V which is open towards the pressure side surface (10) and which comprises an apex whose orthogonal projection on the transverse head section is located on the first centre of gravity (G1).

2. The vane (1) according to the preceding claim, **characterised in that** the first centre of gravity (G1) is linked to a reference frame of inertia comprising a first axis of inertia (I1) and a second axis of inertia (I2) which are perpendicular and which pass through the first centre of gravity, the first straight line (L1) being inclined at a first angle to the first axis of inertia (I1) and the second straight line (L2) being inclined at a second angle to the first axis of inertia (I2).

3. The vane (1) according to the preceding claim, **characterised in that** the first centre of gravity (G1) is arranged at:

   - a first predetermined distance from a third straight line (D1), defined in the first plane of the transverse head section, which is tangent with the leading edge (8) at a point (B1) and parallel to the first axis of inertia (I1) and a second predetermined distance, and
   - a second predetermined distance from a fourth straight line (D2) in the first plane of the transverse head section which is tangent to the trailing edge (9) at a point (B2) and parallel to the first axis of inertia (I1).

4. The vane (1) according to one of the preceding claims, **characterised in that** the predetermined zone (ZG) is delimited by a third straight line (L3) which is parallel to the first axis of inertia (I1) and offset towards the pressure side surface (10) by a predetermined distance.

5. The vane (1) according to any one of the preceding claims, **characterised in that** the vane is movable and the blade (5) is full.

6. The vane (1) according to any one of the preceding claims, **characterised in that** the vane comprises a base (12) located at a radially inner end (6) of the blade, opposite in the radial direction to the radially outer end (7), the trailing edge (9) having a first thickening (30) located radially between a first platform (16) of the base and the blade, and extending transversely on either side of the trailing edge (9).

7. The vane (1) according to any one of the preceding claims, **characterised in that** the root (17) comprises a second platform (18) which is defined in a plane inclined radially towards the outside and forming an angle of between 0° and 40° with the plane of the transverse head section.

8. The vane (1) according to the preceding claim, **characterised in that** the trailing edge (9) has a second thickening (31) located between the second platform (18) and the blade and extending at least partially transversely on either side of the trailing edge.

9. The vane (1) according to one of claims 6 to 8, **characterised in that** the first thickening (30) and the second thickening (31) each comprise an axial section of generally triangular shape.

10. The vane (1) according to one of claims 6 to 8, **characterised in that** the first thickening (30) and the second thickening (31) each extend respectively from one of the radially inner and outer ends between 10 and 30% of the radial height of the blade.

11. The vane (1) according to any one of the preceding claims, **characterised in that** the predetermined zone is delimited by the median line of the blade which is intersected by the first straight line and the second straight line.

12. The vane (1) according to one of the preceding claims, **characterised in that** the predetermined zone is delimited by a curved line parallel to the median line of the blade, the curved line being located at a maximum distance corresponding to twice the transverse thickness of the blade from the suction side surface.

13. A mobile wheel of a turbine engine comprising a disc (4) centred on a longitudinal axis X and a plurality of vanes (1), according to any one of claims 1 to 12, extending from the periphery of the disc and evenly distributed about the longitudinal axis.

14. A turbine engine (2) comprising a vane (1) according to any one of claims 1 to 12 or a wheel according to the preceding claim.

15. A method for optimising a profile of a vane for a turbine engine of an aircraft, the vane comprising a blade (5) with a root (17), extending in a radial direction, at a radially outer end (7) and a transverse head section (ST) at the radially outer end, the root (17) extending radially towards the outside from the transverse head section (ST), the method comprising the following steps of:

   - calculating a first centre of gravity (G1) of the transverse head section of the blade,
   - calculating a second centre of gravity (G2) of the root (17);
   - comparing the coordinates of the first centre of gravity (G1) of transverse head section and the second centre of gravity (G2) of the root;
   - measuring the distance between the first and second centre of gravity according to an orthogonal projection of the plane in which the second centre of gravity of the root is defined in the plane of the transverse head section; and
   - compensating in which the second centre of gravity of the root is offset at least transversely from the first centre of the gravity of the transverse head section in a predetermined zone (ZG), the predetermined zone (ZG) being delimited at least partially by a first straight line and a second straight line substantially forming a V which is open towards a pressure side surface of the blade and which comprises an apex, the orthogonal projection of which is located on the first centre of gravity.

Fig.1

Fig.2

Fig.3

Fig.4

Fig.5

Fig.6

Fig.7

Fig.8

**EP 3 983 651 B1**

**RÉFÉRENCES CITÉES DANS LA DESCRIPTION**

**Documents brevets cités dans la description**

- JP H0960501 A
- JP 2000018003 A
- JP H07253001 A

- US 4165949 A
- EP 1612372 A1